Europäisches Patentamt

European Patent Office

Office européen des brevets

(11) Publication number: **0 338 468**
**A1**

## EUROPEAN PATENT APPLICATION

(21) Application number: **89106793.6**

(22) Date of filing: **16.04.89**

(51) Int. Cl.⁴: **A01D 90/08**

(30) Priority: **19.04.88 IT 6736088**

(43) Date of publication of application:
**25.10.89 Bulletin 89/43** .

(84) Designated Contracting States:
**AT CH DE ES FR LI**

(71) Applicant: **SO.RE.MA. OPERATRICI
FERROVIARIE S.N.C. DI CESARE ROSSANIGO
& C.**
**Cascina Rossanigo 16**
**I-15042 Bassignana (Province of
Alessandria)(IT)**

(72) Inventor: **Rossanigo, Cesare**
**Cascina Rossanigo 16**
**I-15042 Bassignana (Alessandria)(IT)**

(74) Representative: **Modiano, Guido et al
MODIANO, JOSIF, PISANTY & STAUB
Modiano & Associati Via Meravigli, 16
I-20123 Milan(IT)**

(54) Automatic machine for gathering, loading and transporting bales of forage and the like.

(57) The machine comprises a box-shaped chassis
(11) delimited by a pair of lateral lattice-like shoulders provided with guides (15-16) on their upper
edges, a loading carriage (17) which is horizontally
movable on the guides and controlled by a
reversible-motor; a vertically movable loading clamp
(19) is suspended from the carriage and extends for
the entire transverse dimension of the chassis and
has opposite closeable jaws adapted to grip a row
(FB) of bales arranged side by side on a front
conveyor (23) on which the bales are deposited by
pickup means (30). The clamp is suspended from
the carriage by means of an arm (21) controlled by
lifting means (20) for transferring and stacking the
rows of bales in successive layers inside the box-
shaped chassis by virtue of the concomitant motion
of the carriage.

Fig. 2

# AUTOMATIC MACHINE FOR GATHERING, LOADING AND TRANSPORTING BALES OF FORAGE AND THE LIKE

The present invention relates to an automatic machine for gathering, loading and transporting bales of forage and the like, particularly parallelepipedal bales.

Current machines for loading and transporting forage bales comprise a towable chassis with one or two axles, lateral and rear walls which form a lattice-like box-shaped element, and a plurality of platforms which substantially have the same size as the chassis and are arranged mutually stacked on said chassis.

Said platforms are vertically movable and are controlled by movement means, generally constituted by suspension and lifting cables, which according to the operator's controls move each platform upwards when each of said platforms is fully loaded.

On its front side, the box-shaped element is closed by a corresponding wall provided with an opening for the entry of the bales; a conveyor with transverse chains is arranged in front of said opening, and a pickup device deposits the bales thereon after lifting them off the ground; the transfer from the conveyor to the platform is performed by a pusher which aligns the bales in successive side-by-side rows until each platform is full. A full-load feeler stops the pickup device and gives the operator a signal for the lifting of the platform; the operation is repeated a number of times corresponding to the number of platforms with which the trailer is equipped.

The machine is completed by an unloading device which is composed of longitudinal conveyors which re-transfer the bales onto the transverse conveyor and by blades which unload said bales from said transverse conveyor to transfer them to an elevator or to other handling units for storage.

Such known machines have several disadvantages, and most of all the excessive structural complexity which severely penalizes their transport capacity. The loading coefficient of such machines is in fact comprised between 30 and 35%, where the loading coefficient is the volume of a typical bale in relation to the volume required to transport it and handle it.

In other words, current machines for loading and transporting bales of forage or the like require dimensions which are on the whole equal to three times the volume of the load being transported. This fact, besides implying evident economic disadvantages, also imparts the machine with considerable instability during motion, especially on not perfectly flat ground, and significantly increases its weight, to the detriment of the power required to tow it.

In known machines of the specified kind the total gathering, loading and unloading times are furthermore considerable and their yield in terms of amount of product stored per hour is consequently very small.

Accordingly, the aim of the present invention is to eliminate these disadvantages.

Within the scope of this general aim an object of the invention is to provide a structurally simplified machine with high transport capacity arising from a significant increase in the loading coefficient, said increase being of the order of 15-20%.

Another object of the invention is to provide a machine which is improved from the point of view of functional efficiency, has a high yield in terms of product loaded and transported per unit of time and high characteristics of reliability in operation.

A further object of the invention is to provide a machine which is highly automated in operation, has reduced weight and dimensions, is maneuverable and has high characteristics of stability during motion even on non-level ground.

A not least object of the invention is to provide a machine which is economically advantageous both from the point of view of manufacturing costs and from the point of view of running costs.

Yet another object of the invention is to provide a machine for universal use, capable of loading and transporting bales of any geometrical shape.

This aim, these important objects and others which will become apparent hereinafter are achieved by a machine for gathering, loading and transporting bales of forage and the like of any geometrical shape, characterized in that it comprises a chassis delimited by at least one pair of side walls having guides on their respective upper edges; a loading carriage which is movable on said guides and is controlled by reversible-actuation means; a loading clamp supported by said carriage, which extends for the entire transverse dimension of the chassis, said clamp being adapted to grip a row of bales arranged side by side on a front conveyor, on which said bales are deposited by pickup means, said clamp being controlled by lifting means for transferring and stacking rows of bales in successive layers inside said frame by virtue of concomitant motion of said carriage.

Further characteristics and advantages of the invention will become apparent from the following detailed description and with reference to the accompanying drawings given only by way of non-limitative example, wherein:

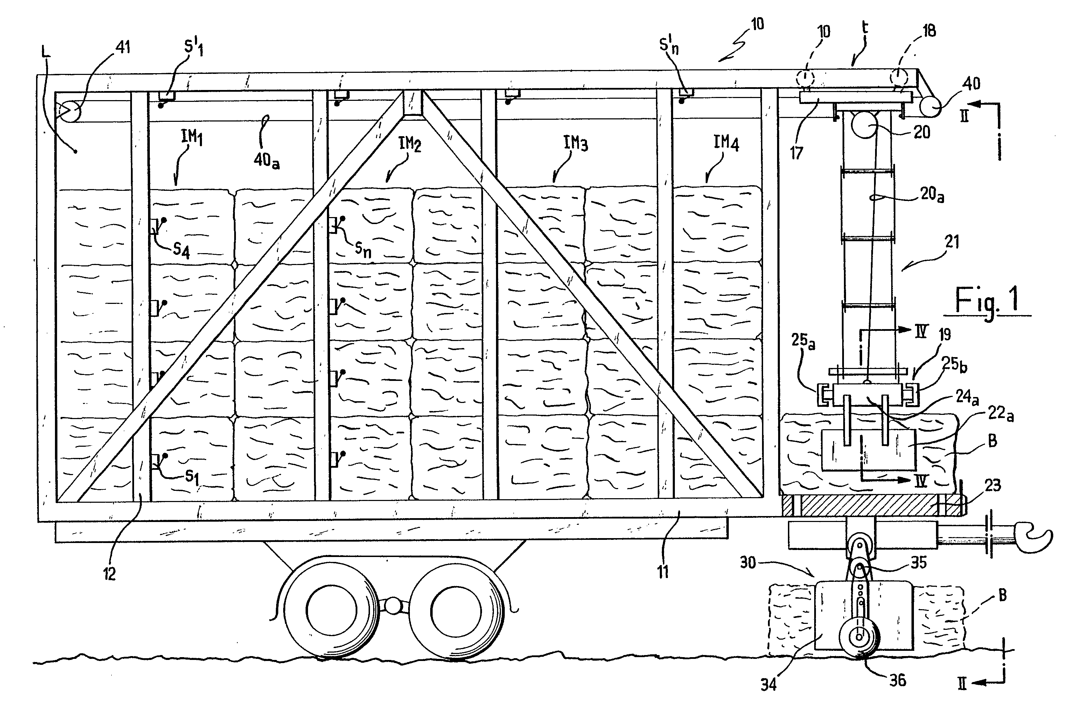

figure 1 is a lateral elevation view of the machine according to the invention;

figure 2 is a front view of the machine taken in the direction of the arrows II-II of figure 1;

figure 3 is an enlarged-scale detail view of figure 2, illustrating the detail of the pickup means;

figure 4 is an enlarged-scale sectional view taken along the line IV-IV of figure 1.

In the drawings, the reference numeral 10 generally indicates the machine, which comprises a box-shaped chassis or frame 11 delimited by at least two lattice-like lateral walls 12-13, preferably connected by rear crosspieces 14. The walls 12-13 have, on their upper edges, respective substantially horizontal guides constituted by C-shaped rails 15 and 16, the longitudinal extension whereof is greater than that of said walls so that said rails protrude frontally from the box-shaped element by an amount t which is substantially equal in length to the longitudinal extension of a bale of forage B of the known parallelepipedal type.

A loading carriage 17 is horizontally movable on said guides 15 and 16 and has sliding wheels 18 which engage, for guiding and retention, within the rail which constitutes each guide.

A vertically movable loading clamp 19 is suspended from the carriage 17 and is controlled by lifting means, preferably constituted by a winch 20 with reversible motion with which a clamp suspension and movement cable 20a co-operates.

The clamp 19 is furthermore connected to the carriage 17 by means of an arm 21 which is articulated like a parallelogram and has the function of guiding said clamp in its lifting and lowering movements, keeping it parallel to itself.

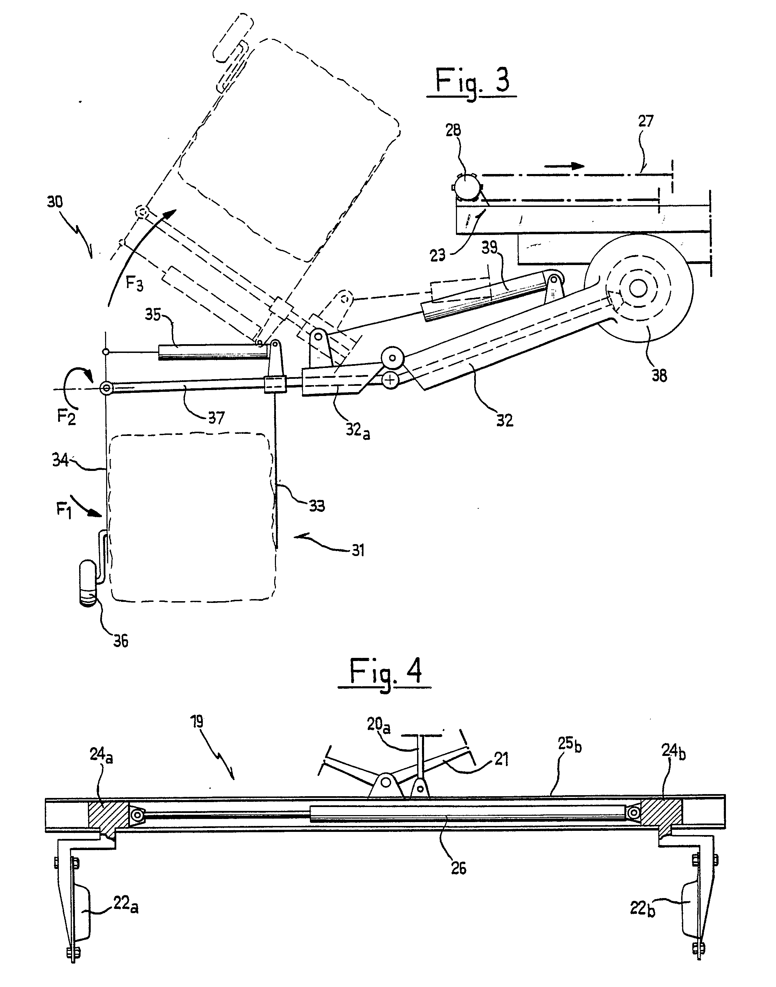

As clearly illustrated in figure 4, the clamp 19 has a pair of opposite mutually approachable jaws 22a-22b adapted to grip rows FB of bales arranged side by side on a transverse conveyor 23 arranged in front of the chassis 11 and below the protruding portion t of the rails 15 and 16. Each jaw is rigidly associated with a corresponding slider 24a-24b slidably guided in corresponding C-shaped rails 25a-25b arranged beside the clamp; said sliders are controlled by at least one double-action fluid-dynamic jack 26 which is adapted to mutually approach said jaws or space them mutually apart to correspondingly grip or release said rows of bales. The delivery of fluid to the jack 26 is controlled by an adjustable pressure gauge correlated to the clamp lifting means, so that once the preset mutual approach force is reached said lifting means are actuated.

The transverse conveyor 23 is preferably constituted by a plurality of chains 27 trained around toothed pinions 28 (fig. 3) keyed on corresponding drive and transmission shafts; the drive shaft is operatively connected to a gearmotor 29. Said gearmotor is of the intermittently operating type and advances by a step equal to the transverse dimension of the bales which are progressively deposited on said conveyor by pickup means 30 to form said row FB; an end feeler (not illustrated) is adapted to stop the motion of the conveyor and to activate the loading clamp when each row FB has been formed.

The pickup means 30 are preferably constructed as illustrated in the figure and comprise a small grip carriage 31 supported by a horizontally protruding supporting and lifting arm 32.

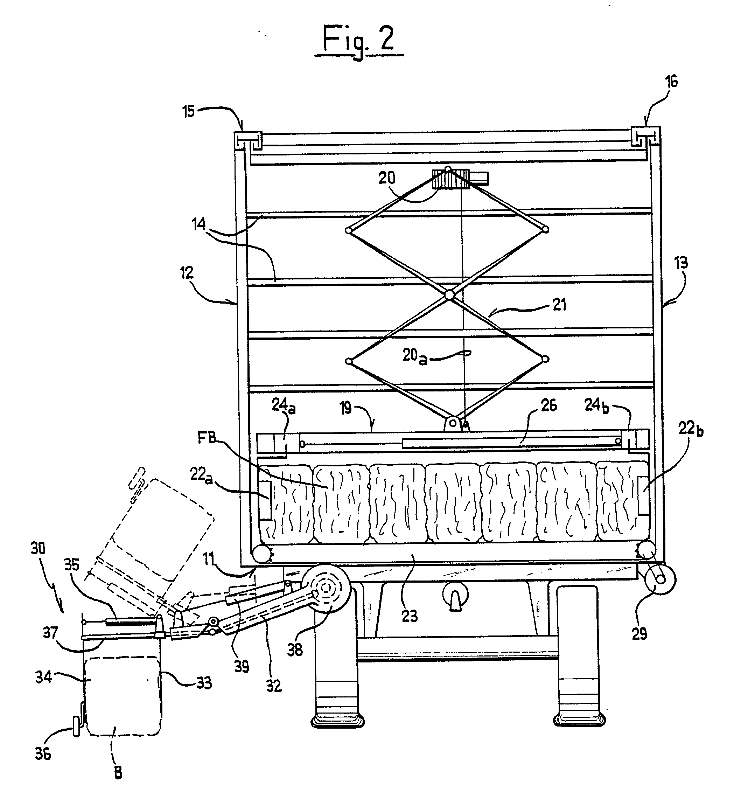

The carriage 31 comprises an inner fixed element 33 which co-operates with a movable outer element 34, controlled by a first fluid-dynamic jack 35 which opens and closes the movable element 34 onto the fixed element 33 to grip and release each bale; the movable element 34 has a sliding wheel 36. The elements 33-34 and the related supports are rigidly associated with the end of a rotatable shaft 37 contained in the arm 32 and actuated by a reversible reduction motor 38; the rotatable shaft is adapted to overturn the carriage to make it assume the loading position, illustrated in broken lines in figures 2 and 3, and vice versa.

Again for loading, the arm 32 comprises an articulated portion 32a which is controlled by a second fluid-dynamic jack 39 adapted to rotate the carriage 31 after it has been overturned so as to deposit the bale on the conveyor 23.

The operating sequence of the pickup means is illustrated in the order by the arrows F1-F2 and F3 and consists of the following steps: alignment of the pickup means with each bale laying on the field, closure of the outer element 34 and gripping of the bale (F1), upward overturning of the carriage 31 by virtue of the rotation of the shaft 37 (F2), rotation of the portion 32a of the horizontally protruding shaft (F3).

Once the bale has been loaded onto the transverse conveyor 23, the arm is lowered again and the carriage is rotated back to its initial position.

As previously mentioned, when the row FB of bales is complete, the loading clamp 19 is lowered by means of the winch 20, the jaws 22 are closed and the entire row is gripped to be transferred, by virtue of the motion of the carriage 17, inside the box-shaped element 11 where said rows are stored in successive adjacent stacks as indicated by IM1...IMn. A plurality of sensors S1-S2...Sn, for example microswitches, indicates the progressive height of the stack and consequently adjusts the stroke of the lifting winch 19 to deposit the successive bales until each stack is completed.

As an alternative to the sensors S1...Sn, a per se known dynamometric device, sensitive to the tension of the lifting cable 20a, can be used to actuate a motion reverser for the winch 20 when the cable slackens both during deposition and when picking up the load.

Such stacks are lower than the walls of the box-shaped element, so that an upper opening L, required to allow the passage of the carriage 17 and of the clamp 19 connected thereto, is defined. A second plurality of sensors $S'1...S'n$ indicates that the upper limit of each stack has been reached: each sensor is adapted to activate a stroke limit actuator (not illustrated) which adjusts the excursion of the carriage 17 and reduces it by a step equal to the longitudinal dimension of the bale to form the immediately adjacent stack until all the useful storage room is used.

The motion of the carriage 17 can be provided in any manner. In the illustrated example it is provided by means of at least one cable 40a which winds on a motorized winch 40 and is returned by a pulley 41; the ends of the cable are connected on the two opposite sides of said carriage. The box-shaped element is unloaded in the opposite manner to what has been described, removing the rows from each stack and depositing them on the transverse conveyor from which said bales are routed to the handling means for storage.

The details of execution and the embodiments may naturally be varied extensively with respect to what has been described and illustrated by way of non-limitative example without altering the concept of the invention and without thereby abandoning the scope thereof.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Automatic machine for gathering, loading and transporting bales of forage and the like, characterized in that it comprises a chassis delimited by at least one pair of side walls having guides on their upper edges, a loading carriage which is movable on said guides and controlled by reversible-actuation means, a loading clamp supported by said carriage, which extends for the entire transverse dimension of the chassis, a front conveyor, and pickup means for loading bales onto said front conveyor, said clamp being adapted to grip a row of bales arranged side by side on said front conveyor by said pickup means; said clamp being controlled by lifting means for transferring rows of bales from said front conveyor and stacking rows of bales in successive layers inside said frame between said side walls by virtue of concomitant motion of said carriage.

2. Machine according to claim 1, characterized in that said loading clamp has rails for guiding and retaining a pair of opposite sliders, each of which bears a corresponding grip jaw, and in that at least one double-action fluid-dynamic jack adapted to close or open said jaws to correspondingly grip or release rows of bales is interposed between said opposite sliders.

3. Machine according to claims 1 and 2, characterized in that the front conveyor is formed by a plurality of transverse chains trained around toothed pinions keyed on corresponding drive and transmission shafts and in that the drive shaft is operatively connected to a gearmotor which operates intermittently with step advancements equal to the transverse dimension of each bale.

4. Machine according to claims 1 to 3, characterized in that the pickup means comprise a grip carriage supported by a horizontally protruding arm having at least one articulated portion, means for overturning said carriage and means for rotating at least said articulated portion of said arm to deposit each bale on said front conveyor.

5. Machine according to claim 4, characterized in that the grip carriage comprises a fixed inner element and a movable outer element which co-operates therewith, controlled by a fluid-dynamic jack to grip and release each bale.

6. Machine according to claim 4, characterized in that said carriage is supported at the end of a rotating shaft which is contained in said horizontally arm and in that said rotating shaft is actuated by a reducer adapted to overturn the carriage to move it from the pickup position to the unloading position and vice versa.

7. Machine according to claim 4, characterized in that the articulated portion of the horizontally protruding arm is in turn controlled by a reversible jack.

8. Machine according to claim 1, characterized in that said guides have a portion which protrudes frontally from the box-shaped element and has an extension substantially equivalent to the longitudinal dimension of the bales.

9. Machine according to claim 1, wherein said loading clamp is vertically moved by a winch and a co-operating cable.

10. Machine according to claim 1, characterized in that the means for moving the carriage comprise a winch which co-operates with at least one traction cable; the ends of said cable being rigidly associated with opposite portions of the carriage.

11. Machine according to one or more of the preceding claims, characterized in that it comprises first sensor means adapted to detect the progressive height of each bale stack and to correspondingly adjust the stroke of the loading clamp and second sensor means adapted to detect the reaching of the upper limit of each stack and to activate a stroke limit actuation which adjusts the stroke of the loading carriage and reduces it to a step equal to the longitudinal dimension of each bale to form the immediately adjacent stack until the useful loading room is completely used up.

**Fig. 1**

# Fig. 2

## Fig. 3

## Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | WO-A-8200565 (WILSON)<br>* page 5, line 15 - page 18, line 16; figures 1-28 *<br>--- | 1, 2, 3, 4, 9, 10, 11 | A01D90/08 |
| X | GB-A-2092089 (MAITRE)<br>* page 2, line 3 - page 5, line 39; figures 1-12 *<br>--- | 1, 3, 4, 9, 10, 11 | |
| A | US-A-3443699 (LUNDAHL)<br>* column 3, line 12 - column 12, line 9; figures 1-18 *<br>--- | 1, 2, 9 | |
| A | US-A-3690473 (MIGUEL)<br>* column 3, line 1 - column 20, line 9; figures 1-20 *<br>----- | 1, 2 | |

TECHNICAL FIELDS
SEARCHED (Int. Cl.4 )

A01D

The present search report has been drawn up for all claims

| Place of search | Date of completion of the search | Examiner |
|---|---|---|
| THE HAGUE | 12 JULY 1989 | VERMANDER R.H. |